# EUROPEAN PATENT APPLICATION

(11) **EP 3 513 650 A1**
(43) Date of publication of application: **24.07.2019**
(21) Application number: 17850039.3
(22) Date of filing: 17.05.2017
(51) Int. Cl.: A01G 29/00

(54) **PLANT WATERING BOTTLE**

(30) Priority: 13.09.2016 CN 201610818338
(71) Applicant: Yuncheng Qinghai Science & Technology Co., Ltd, Yuncheng, Shanxi 044000 (CN)
(72) Inventor: ZHAO, Shuhai, Yuncheng, Shanxi 044000 (CN)
(74) Representative: Vitina, Maruta
(86) International application number: PCT/CN2017/084711
(87) International publication number: WO 2018/049833

(57) **Abstract**

A device for improving plant survival, comprising: a water storage container (1), an evaporation cover (2), a funnel (3), an indication rod (4), and a float (5). The evaporation cover is provided on the water storage container (1). The evaporation cover (2) is an air-permeable structure, and is upwardly connected to the funnel (3). The indication rod (4) is provided in the neck of the funnel (3). A bottom end of the indication rod (4) is connected to the float (5). The float (5) drives the indication rod (4) to indicate a water level in the water storage container (1). The method for use comprises: burying the water storage container (1) and the evaporation cover (2) in soil near a plant root; injecting water into the water storage container (1) via the funnel (3); and allowing the water in the water storage container (1) to naturally evaporate via the evaporation cover (2) to water the soil and to keep water in the soil to maintain the survival of the plant. The benefits thereof include low application costs and suitability for use in droughts and water-resource-deficient areas. Use of the device for improving plant survival ensures the survival of a plant subjected to a continuous drought, prevents domestic plants from dying when their owners leave for a long time, and enables planting in drought-ridden, desertified and desert areas, thereby transforming a desert area into an oasis and improving the environment.

## Description

### TECHNICAL FIELD

The invention relates to devices for improving plant survival during the drought.

### BACKGROUND OF THE INVENTION

Naturally growing plants or cultivated plants may lose their lives due to the lack of water during the drought. For example, 4 months without rain in some areas may lead to a large number of deaths in plants. In the case where people are out for 2 months, the cultivated plants may die without watering. In some arid areas, only grass can survive because trees cannot resist the water shortage for a period. In such arid areas, it is difficult for economic trees such as fruit trees, poplars and pine trees to survive. In some areas, because of the drought, the land is deserted and eventually turns into a desert. As a result, plants cannot survive and a large amount of rain water is wasted.

### SUMMARY OF THE INVENTION

An object of the disclosure is to provide a device for improving plant survival during the drought to overcome the above problems.

A device for improving plant survival includes a water storage container, an evaporation cover, a funnel, an indicator rod and a float. The water storage container is used for water storage. The evaporation cover is provided on the water storage container. The evaporation cover has a gas-permeable structure, and is connected to the funnel. The indicator rod is arranged in a leak tube of the funnel. A gap if formed between the leak tube of the funnel and the indicator rod. A lower end of the indicator rod extends to the water storage container and is connected to the float. The float drives the indicator rod to indicate a water level in the water storage container. The funnel and the evaporation cover can be connected through a conduit.

A use method of the device is described as follows. The water storage container and the evaporation cover are buried in the soil where the plant root is located, and water is filled into the water storage container through the gap between the leak tube of the funnel and the indicator rod. The float floats onto the water surface and then drives the indicator rod to rise to indicate the water level in the water storage container. The indicator rod can be marked with a scale to indicate the level of the water level in the water storage container. Water is fed until the water storage container is filled with water. After that, the water in the water storage container naturally evaporates into the soil through the evaporation cover to maintain the moisture in the soil, thereby maintaining the plant survival. The water storage container filled with water can maintain natural evaporation for 1-5 months or more. The time is determined by the size of the water storage container, the temperature, and water absorption of the plant. For example, in winter the natural evaporation can be maintained for a longer time, and during this period, the plants can survive without watering.

In some embodiments, a gauze is provided outside the evaporation cover to prevent soil or sand from entering the water storage container.

In some embodiments, an inner thread is provided inside the funnel. A filter is arranged in the funnel with the inner thread. A lower end of the filter is provided with an outer thread. An upper end of the filter is provided with a filter pore and an opening for the indicator rod to pass through. The funnel is connected to the evaporation cover through a conduit. A lower end of the conduit is connected to one end of an elbow. A water outlet arranged at the other end of the elbow is provided with a backstop to prevent water in the water storage container from evaporating to the environment through the conduit by blocking the water outlet after water injection is stopped. The elbow is provided with the opening for the indicator rod to pass through. The indicator rod passes through the filter, the funnel, the conduit and the elbow to connect with the float.

In some embodiments, the inner thread in the funnel is tapered. The filter is provided in the funnel with the tapered inner thread. The outer thread at the lower end of the filter is tapered.

In some embodiments, a method for using the disclosed device is as follows. The water storage container and the evaporation cover are buried in the soil of the plant root, and length of the conduit is adjusted according to depth of the plant root. The funnel with the inner thread is slightly below the ground plane, so that the rain on the ground can flow into the water storage container. A plastic sheet may be provided between the inner thread in the funnel and the outer thread at the filter. The plastic sheet is laid to be funnel-shaped and have a certain slope. Rainwater is collected to the filter through the plastic sheet, and flows into the water storage container through the filter hole, the funnel and the conduit. The indicator rod is used to indicate the water level of the water storage container. If the rainfall is too large, the water that exceeds the water storage tank penetrates into the soil through the evaporation cover. After the rain, water in the water storage container naturally evaporates into the soil through the evaporation cover to maintain the moisture in the soil, thereby improving the plant survival. According to the size of the water storage container, the water storage container filled with water can maintain an evaporation time for 4-6 months or more, and during this period, plants can survive without watering. By observing the indicator rod, if water in the water storage container will evaporate completely soon before the occurrence of the next rain, water may be manually injected into the water storage container in time to maintain the plant survival. Another advantage of the present invention is that the amount of water that is manually injected into the water storage container is much less than that for irrigation, thereby significantly reducing the consumption of water resources and labor.

In some embodiments, the water storage container is provided with a pipe connector. A plurality of water storage containers are connected together by a water pipe, so that the plurality of water storage containers and the evaporation covers may be buried in the soil of a large plant root. Rainwater can flow into one of the devices, and when the surface of the rainwater flowing into the water storage container of the device is higher than the pipe connector, the rainwater will flow into other water storage containers. Therefore, more rainwater may be accumulated to promote the plant growth. The pipe connector can be also connected to tap water underground to achieve artificial irrigation.

In some embodiments, the water storage container and the evaporation cover are integrated to form a water storage evaporator. An upper end of the water storage evaporator is provided with a plurality of vent holes and a lower end of the water storage evaporator is used for water storage. A cover is provided on an opening at the upper end of the water storage evaporator, and the cover is provided with a hole for conduit to pass through. The plurality of vent holes provided at the upper end of the water storage evaporator are covered with a gauze.

### BRIEF DESCRIPTION OF THE DRAWINGS

Fig. 1 is a schematic diagram of a device for improving plant survival according to a first embodiment of the present invention.
Fig. 2 a sectional view of the device in Fig. 1.
Fig. 3 is a schematic diagram of a second embodiment of the present invention.
Fig. 4 schematically shows the device for improving plant survival of the present invention in a use state.
Fig. 5 is a schematic diagram of a water storage container 1 of the device.
Fig. 6 is a top view of the water storage container 1 in Fig. 5.
Fig. 7 is a sectional view of the water storage container 1 shown in Fig. 5.
Fig. 8 is a schematic diagram of an evaporation cover 2 according to the first embodiment of the invention.
Fig. 9 is a top view of the evaporation cover 2 in Fig. 8.
Fig. 10 is a sectional view of the evaporation cover 2 in Fig. 8.
Fig. 11 is a schematic diagram of a funnel 3 according to the first embodiment of the invention.
Fig. 12 is a top view of the funnel 3 in Fig. 11.
Fig. 13 is a sectional view of the funnel 3 in Fig. 11.
Fig. 14 is a schematic diagram of a gauze 6 according to the second embodiment of the invention.
Fig. 15 is a top view of the gauze 6 in Fig. 14.
Fig. 16 is a schematic diagram of a float 5 according to the invention.
Fig. 17 is a top view of the float 5 in Fig. 16.
Fig. 18 is a sectional view of the float 5 in Fig. 16.
Fig. 19 is a schematic diagram of the device according to a third embodiment of the present invention.
Fig. 20 is a sectional view of the device in Fig. 19.
Fig. 21 is a schematic diagram of a funnel 301 having a tapered inner thread of the third embodiment according to the invention.
Fig. 22 is a top view of the funnel 301 having a tapered inner thread in Fig. 21.
Fig. 23 is a sectional view of the funnel 301 having a tapered inner thread shown in Fig. 21.
Fig.24 is a schematic diagram of a filter 303 according to the third embodiment of the invention.
Fig. 25 is a sectional view of the filter 303 in Fig. 24.
Fig. 26 is a sectional view of an elbow 304 according to the third embodiment of the invention.
Fig. 27 is a right side view of the elbow 304 according to the third embodiment in Fig. 26.
Fig. 28 is a schematic diagram of a large evaporation cover 201 according to the third embodiment.
Fig. 29 is a top view of the large evaporation cover 201 in Fig. 28.
Fig. 30 is a sectional view of the large evaporation cover 201 in Fig. 28.
Fig. 31 is a schematic view showing the device according to the third embodiment when used for a large plant 701.
Fig. 32 is a top view of the device shown in Fig. 31.
Fig. 33 is a sectional view of the device in Fig. 31.
Fig. 34 is schematically shows the device according to the third embodiment when used for the large plant 701 grown at a slope.
Fig. 35 is a top view of the device in Fig. 34.
Fig. 36 schematically shows the device according to a fourth example when used for the large plant 701.
Fig. 37 is sectional view of the device taken along A-A in Fig. 36.
Fig. 38 is a schematic diagram showing a water storage container with a lock hook 103 and a pipe connector 101 according to a fifth embodiment.
Fig. 39 is a top view of the water storage container in Fig. 38.
Fig. 40 is a sectional view of the water storage container in Fig. 38.
Fig. 41 is a sectional view showing the structure of an elbow 304 with a water outlet having a gravity-type backstop 3051 according to a sixth embodiment.
Fig. 42 is a right side view of the elbow 304 in Fig. 41.
Fig. 43 is a sectional view showing the structure of the gravity-type backstop 3051 shown in Fig. 41 when in an open state.
Fig. 44 is a schematic diagram of a water storage container 104 having a lower portion larger than an upper portion according to a seventh embodiment.
Fig. 45 is a schematic diagram of a spherical water storage container 105 according to an eighth embodiment.
Fig. 46 is a schematic diagram of a spherical float 501 of a ninth embodiment.
Fig. 47 schematically shows the structure of a device according to a tenth embodiment.

In the drawings: 1-water storage container; 2-evaporation cover; 3-funnel; 4-indicator rod; 5-float; 6-gauze; 7-plant; 8-flower pot; 9-soil; 21-connector for connection to the funnel; 201-larger evaporation cover; 202-hole for conduit to pass through; 301-funnel with a tapered inner thread; 302-conduit; 303-filter; 304-elbow; 305-backstop; 306-tapered inner thread; 307-tapered outer thread; 3031-filter pore; 3032-opening for the indicator rod to pass through; 701-large plant; 308-plastic sheet; 101-pipe connector; 102-water pipe; 103-lock hook; 3051-gravity-typebackstop; 3052-hinge shaft; 3053-hinge mount; 104-water storage container with lower portion larger than upper portion; 105-spherical water storage container; 106-water storage evaporator; 107-vent hole; 108-cover; and 501-spherical float.

### DETAILED DESCRIPTION OF EMBODIMENTS

### Example 1

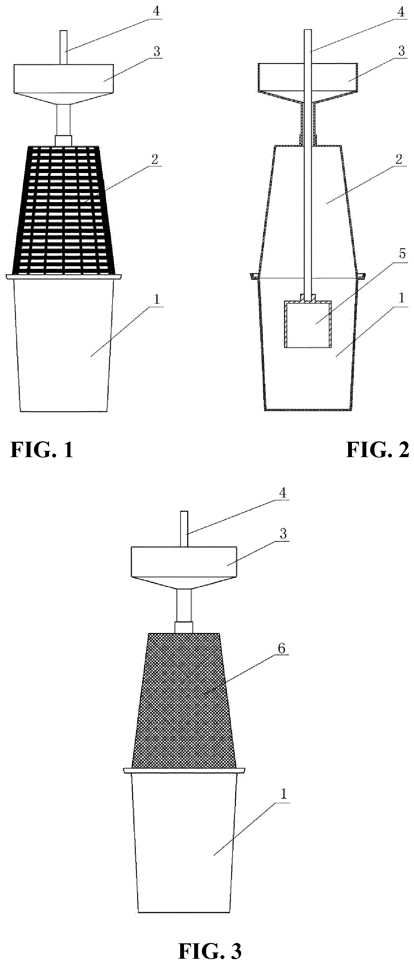

In this embodiment, Fig. 1 schematically shows the structure of a device for improving plant survival. Fig. 2 is a sectional view of the device in Fig. 1. The device for improving plant survival includes a water storage container 1, an evaporation cover2, a funnel 3, an indicator rod 4 and a float 5. The water storage container 1 is used for water storage. The evaporation cover 2 is provided on the water storage container 1 and the evaporation cover 2 has a gas-permeable structure. The evaporation cover 2 is connected to the funnel 3. The indicator rod is arranged in a leak tube of the funnel 3. A gap is formed between the leak tube of the funnel 3 and the indicator rod 4. A lower end of the indicator rod 4 extends to the water storage container 1 and is connected to the float 5. The float 5 drives the indicator rod 4 to indicate a water level in the water storage container 1.

### Example 2

In this embodiment, Fig. 3 schematically shows the structure of a device. Based on the device for improving plant survival of example 1, a gauze 6 is provided outside the evaporation cover 2 to prevent soil or sand from entering the water storage container 1.

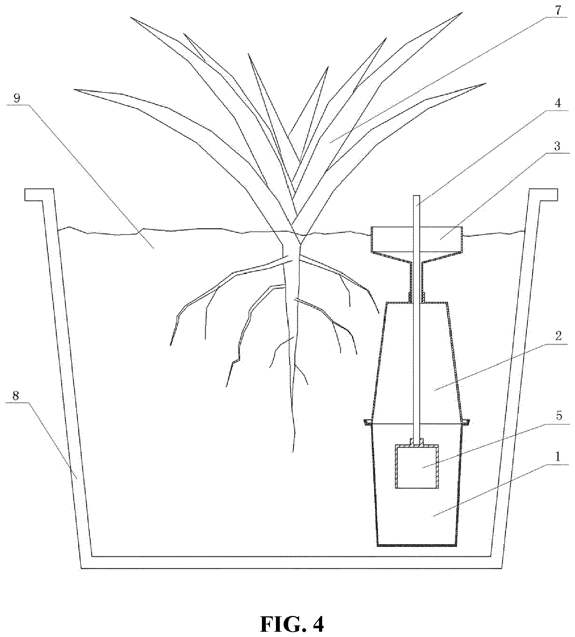

Fig. 4 schematically shows the device for improving plant survival of the present invention when used for maintaining the survival of potted plants. A use method is described as follows. The water storage container 1 and the evaporation cover 2 are buried and in a soil 9 of a plant 7 root in a flower pot 8. Water is filled into the water storage container 1 through the gap between the leak tube of the funnel 3 and the indicator rod 4 and the float 5 is floated onto the water surface. The float 5 drives the indicator rod 4 to indicate the water level in the water storage container 1. The indicator rod 4 may be marked with a scale to indicate the level of the water level in the water storage container 1. Water is filled until the water storage container 1 is full. After that, water in the water storage container 1 evaporates naturally into the soil 9 through the evaporation cover 2 to maintain the moisture in the soil 9, thereby maintaining the plant survival. The water storage container 1 filled with water can maintain natural evaporation for 1 to 5 months or more. The time is determined by the size of the water storage container 1, the temperature, and water absorption of the plant. For example, in winter the natural evaporation can be maintained for a longer time, and during this period, the plant can survive without watering. In the case where the root of plant is deep in the soil, the funnel 3 can be connected to the evaporation cover 2 by a conduit.

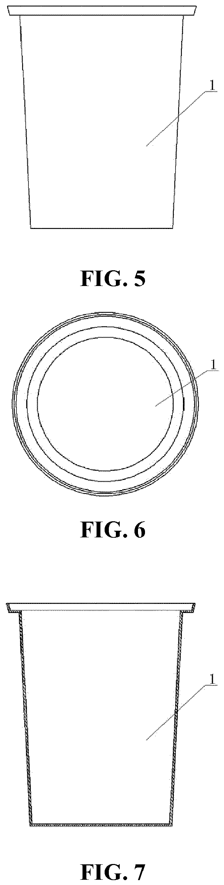

Fig. 5 shows the structure of the water storage container 1 of the device. Fig. 6 is a top view of the water storage container 1 shown in Fig. 5. Fig. 7 is a sectional view of the water storage container 1 shown in Fig. 5. The water storage container 1 may be made of plastic, rubber, ceramics, glass, stainless steel or metal.

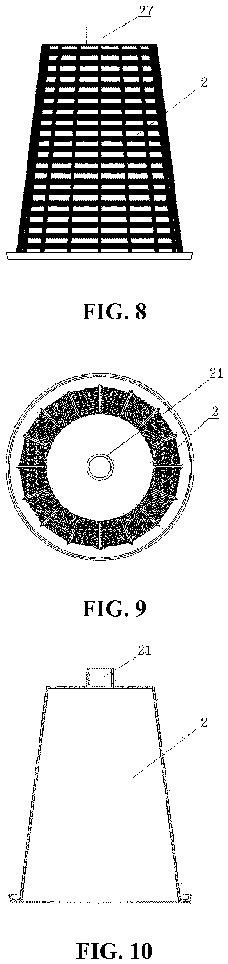

Fig. 8 is a schematic diagram of the evaporation cover 2 of example 1. Fig. 9 is a top view of the evaporation cover 2 shown in Fig. 8. Fig. 10 is a sectional view of the evaporation cover 2 shown in Fig. 8. The evaporation cover 2 has a gas-permeable basket-type structure so that water vapor can pass through. The evaporation cover 2 is provided with a connector for connection to the funnel 3. The evaporation cover 2 may be made of plastic, rubber, ceramics, glass, stainless steel or metal, and may also be a braided fabric made of bamboo, rattan, grass or straw.

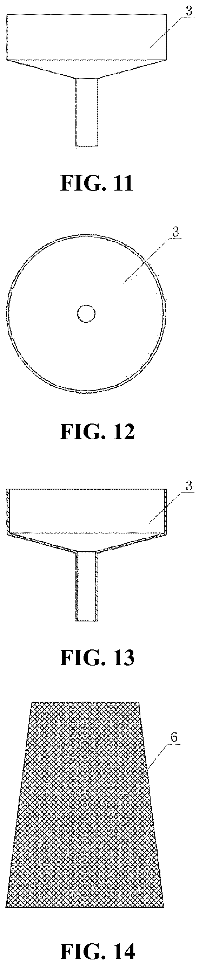

Fig. 11 is a schematic diagram of the funnel 3 of example 1. Fig. 12 is a top view of the funnel 3 shown in Fig. 11. Fig. 13 is a sectional view of the funnel 3 shown in Fig. 11. The funnel 3 may be made of plastic, rubber, ceramics, glass, stainless steel or metal.

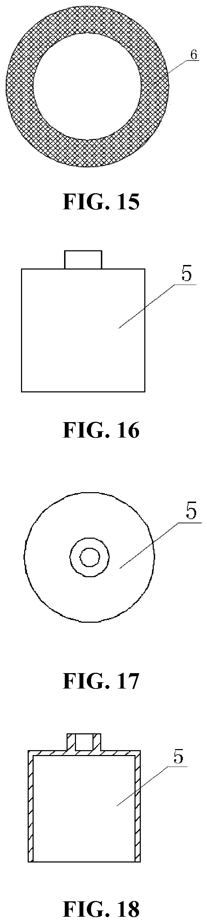

Fig. 14 is a schematic diagram of the gauze 6 of example 2. Fig. 15 is a top view of the gauze 6 shown in Fig. 14. The gauze 6 may be made of metal, nylon or plastic, and may also be a braided fabric made of cloth, palm fiber, bamboo, rattan, grass or straw. The gauze 6 made of a flat mesh or cloth is provided with a joint seam.

Fig. 16 is a schematic diagram of the float 5. Fig. 17 is a top view of the float 5 shown in Fig. 16. Fig. 18 is a sectional view of the float 5 shown in Fig. 16. The float 5 is barrel-shaped and has a lower opening. An upper end of the float 5 is provided with an indicator rod connector. The float 5 may be made of plastic, rubber, ceramic, glass, stainless steel, metal, or the like. The indicator rod 4 may be made of plastic, ceramic, glass, stainless steel, aluminum alloy, bamboo, wood, or the like.

### Example 3

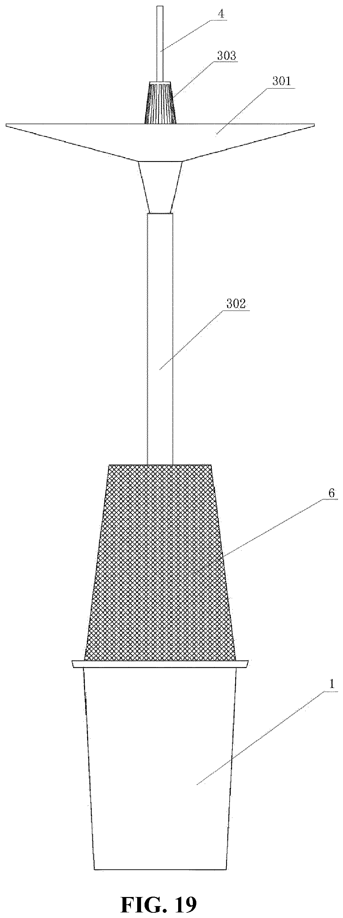

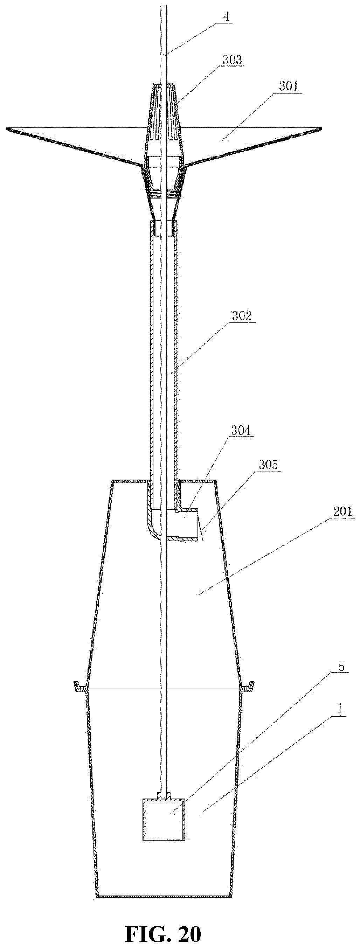

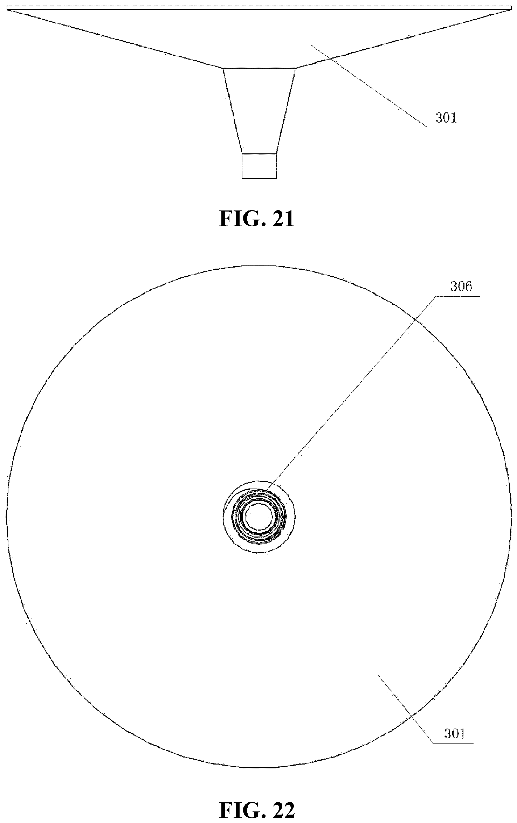

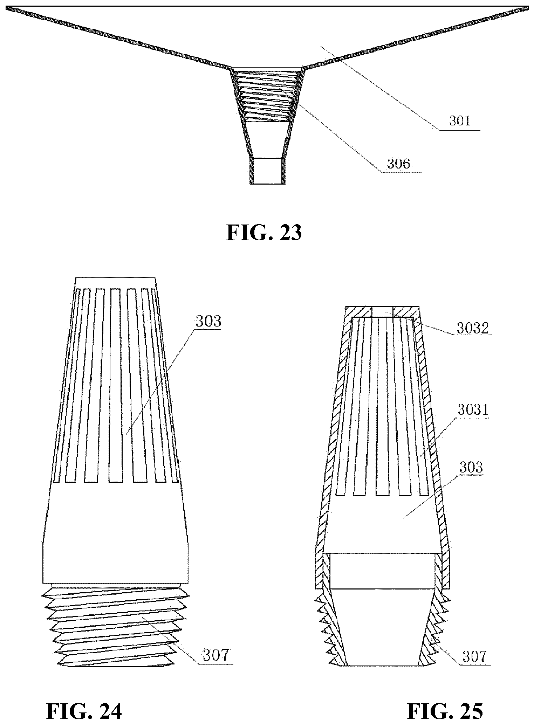

In this embodiment, Fig. 19 schematically shows the structure of the device for improving plant survival. Fig. 20 is a sectional view of the device in Fig. 19. The device for improving plant survival of the invention can be used for larger plants, such as trees. Different from the funnel 3 in example 1, the funnel 3 in this embodiment is equipped with a filter therein, which can prevent floating objects such as leaves, weeds, branches, and small animals from entering the device. The funnel 3 and the filter can be connected in various ways, such as lock hook and thread. The present embodiment exemplarily shows a connection by a tapered thread. Fig. 21 shows the structure of a funnel 301 with a tapered inner thread of example 3. Fig. 22 is a top view of the funnel with the tapered inner thread 301 shown in Fig. 21. Fig. 23 is a sectional view of the funnel with the tapered inner thread 301 shown in Fig. 21. Fig. 24 shows the structure of the filter 303 of example 3. Fig. 25 is a sectional view of the filter 303 shown in Fig. 24. The funnel is provided with a tapered inner thread 306 and a lower end of the filter 303 is provided with a tapered outer thread 307. The filter 303 is arranged in the funnel 301 with the tapered inner thread. An upper end of the filter 303 is provided with a filter pore 3031 and a hole 3032 for the indicator rod to pass through. The filter pore 3031 can be in other shapes, such as a mesh or circular hole shape. The filter can also be replaced by a floor drain, but the floor drain may be easily clogged by leaves. The funnel 301 with the tapered inner thread is connected to the evaporation cover through a conduit 302. A lower end of the conduit 302 is connected to an elbow 304.

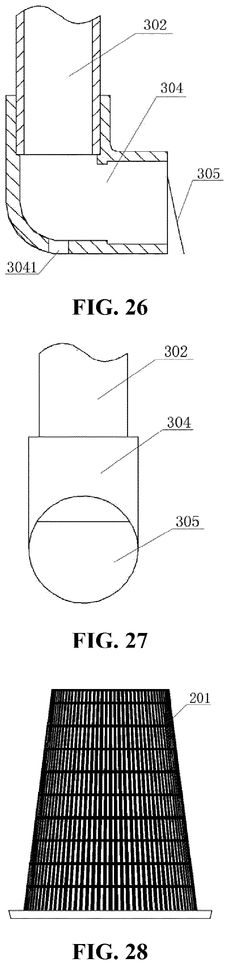

Fig. 26 schematically shows the sectional structure of the elbow 304 according to example 3. Fig. 27 is a right side view of the elbow shown in Fig. 26. A water outlet at the other end of the elbow 304 is provided with a backstop 305 to block the water outlet after water injection is stopped, thereby preventing the water vapor in the water storage container 1 from evaporating to the atmosphere through the conduit 302 The elbow 304 is provided with a hole 3041 for the indicator rod to pass through. The indicator rod 4 passes through the filter 303, the funnel 301 with the tapered inner thread, the conduit 302 and the elbow 304 to connect with the float 5.

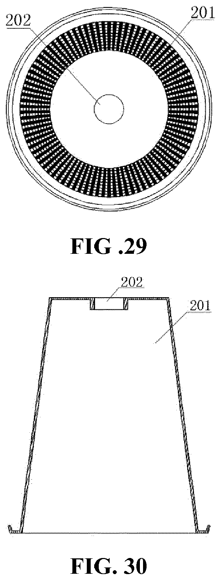

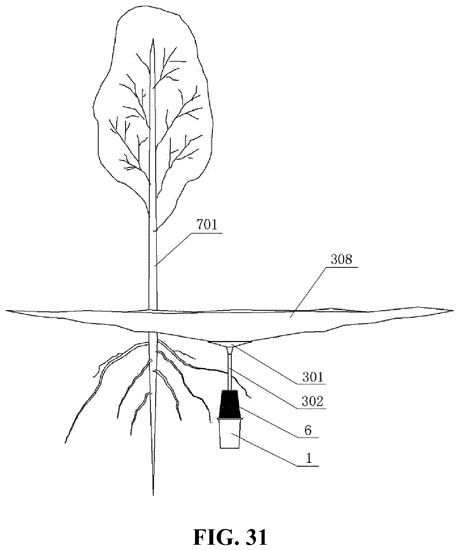

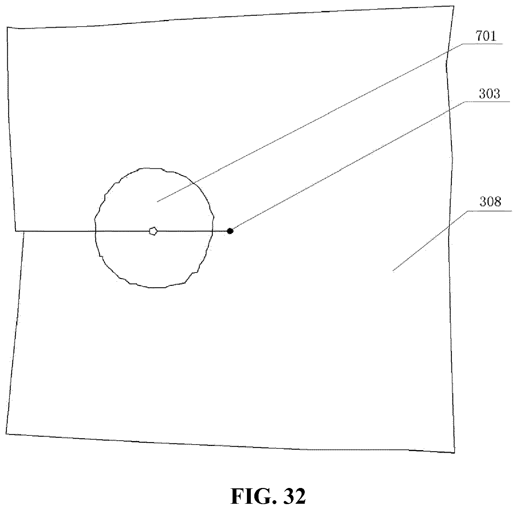

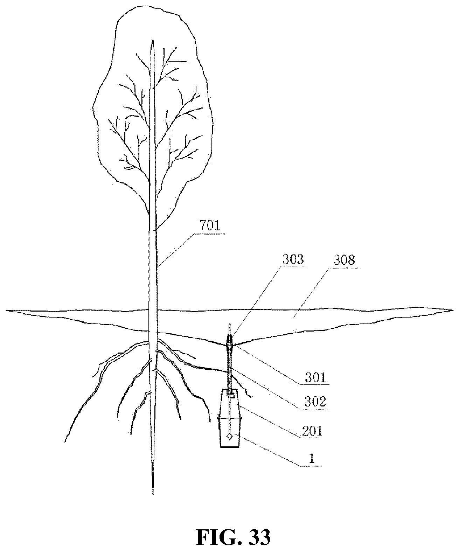

Fig. 28 schematically shows the structure of a large evaporation cover 201 in example 3. Fig. 29 is a top view of the large evaporation cover shown in Fig. 28. Fig. 30 is a sectional view of the large evaporation cover shown in Fig. 28. The large evaporation cover is provided with a hole 202 for the conduit to pass through. Fig. 31 schematically shows the device in example 3 when used for improving the survival of large plant 701. Fig. 32 is a top view of the device used for improving the survival of large plant 701 shown in Fig. 31. Fig. 33 is a sectional view of the device used for improving the survival of large plant 701 shown in Fig. 31. A use method is described as follows. The water storage container 1 and the larger evaporation cover 201 are buried in the soil of the root of the large plant 701. The length of the conduit 302 is adjusted according to the depth of the plant root. The funnel 301 with the tapered inner thread is placed slightly below the ground plane, so that the rain water on the ground can flow into the water storage container 1.

A plastic sheet can be inserted between the tapered inner thread 306 of the funnel and the tapered outer thread 307 of the filter 303. Compared to an ordinary thread, the tapered inner thread can allow different thicknesses of plastic sheets to insert. On the basis of soil, the plastic sheet 308 is laid to be funnel-shaped with a certain slope. The surrounding edges of the plastic sheet are compacted with soil, sand or stone to avoid being blown away by the wind. Rain water gathers to the filter 303 through the surface of the plastic sheet 308, and flows into the water storage container 1 through the filter hole 3031, the funnel, the conduit 302.

The indicator rod 4 indicates the water level in the storage container 1. If the rainfall is too large, the water exceeding the water storage container 1 penetrates into the soil through the evaporation cover 2. After the rain, water in the water storage container 1 evaporates naturally into the soil 9 through the evaporation cover 2 to ensure the moisture in the soil, thereby maintaining the plant survival. The water storage container 1 filled with water, according to the size, can maintain natural evaporation for 4-6 months or more. During this period, plants can survive without watering.

The water level in the water storage container is indicated by the indicator rod 4. If water in the water storage container 1 will evaporates completely before the next rain arrives, artificial water injection into the water storage container 1 is carried out in time to promote the plant survival. Another advantage of the disclosed device is that the water amount of the artificial injection into the water storage container 1 is much less than that of the irrigation. Therefore, such device is especially suitable in areas where water resources are scarce due to the low consumption of water and labor.

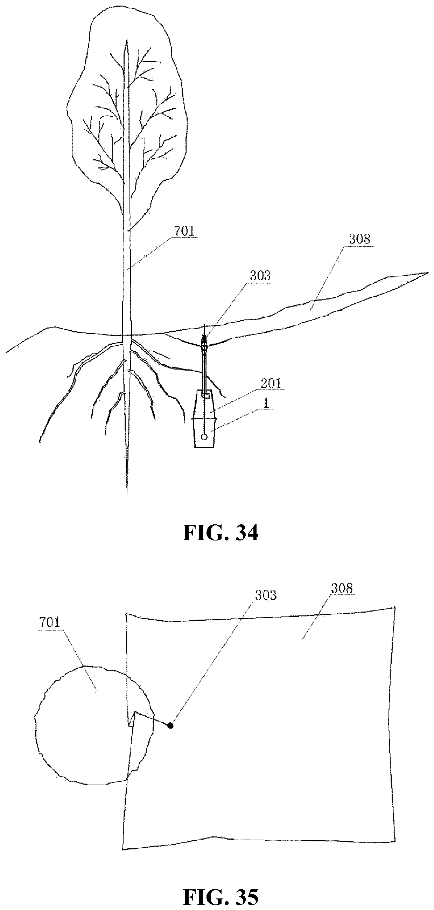

Fig. 34 schematically shows the device in example 3 when used for a large plant 701 grown at a slope. Fig. 35 is a top view of the device shown in Fig. 34 when used for a large plant 701 grown at a slope. On the hillside, the plastic sheet 308 can be placed at a high place of the hillside to facilitate the collection of rain water. A hole aligned with the leak tube of the funnel is provided on the plastic sheet 308. The plastic sheet 308 is clamped between the tapered inner thread 306 of the funnel and the tapered outer thread 307 of the filter 303.

The plastic sheet 308 in example 3 may be replaced with other waterproof materials, such as linoleum, artificial leather, waterproof cloth, iron sheet and aluminum foil, and may also be replaced with cement, tile, stone flake, etc.

### Example 4

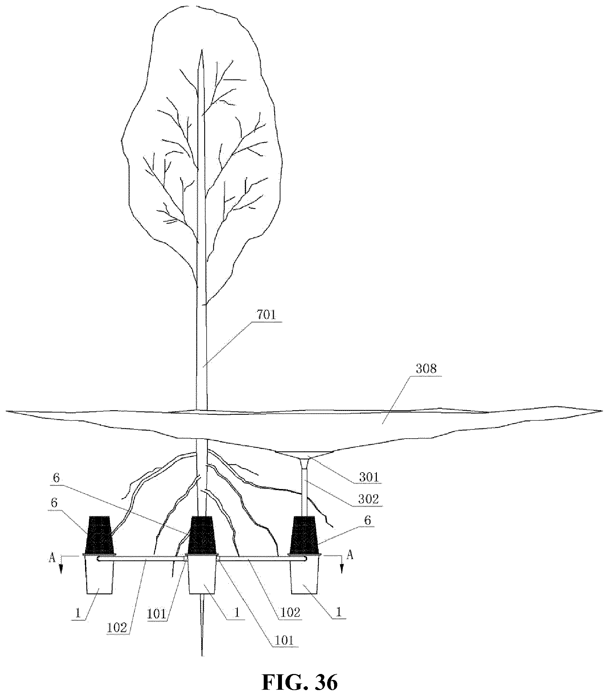

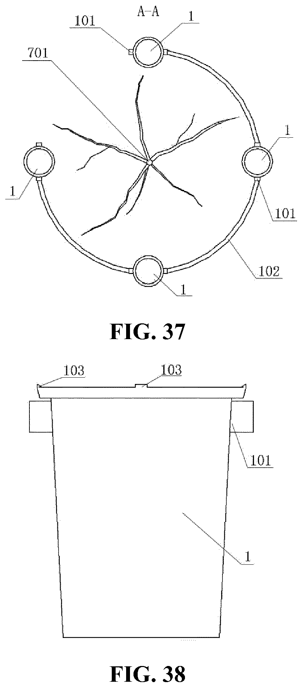

In this embodiment, Fig. 36 schematically shows the device according to example 4 when used for the large plant 701. Fig. 37 is an A-A sectional view showing the device shown in Fig. 36 when used for the large plant 701. The device for improving plant survival can be used for the large trees by placing multiple devices around the roots of large trees. Another solution provided by the present disclosure is described as follows. The water storage container 1 is provided with a pipe connector 101. A plurality of water storage containers 1 may be connected together with a water pipe 102 through the pipe connector 101, thus, a plurality of water storage containers 1 and evaporation covers 2 can be buried in the soil at the root of a large plant 701. One of the devices can be used for the rain to flow into, and when the water surface in the water storage container of this device was higher than the pipe connector 101, water may flow into other water storage containers. Therefore, more rain water can be assembled for improving plant growth. The pipe connector 101 can also be connected to the tap water or irrigation pipe underground to achieve artificial irrigation.

The pipe connector 101 can be arranged at any part of the water storage container 1. The arrangement of the pipe connector 101 at the upper portion of the water storage container 1 provides advantages of slow evaporation, small demand for water and long drought resistance time since water in one of the water storage containers is kept at a high level. However, such arrangement also has a disadvantage of slow growth of plants. The arrangement of the pipe connector 101 at the lower portion of the water storage container 1 may provide advantages of consistent water level among the water storage containers, large evaporation area, and lush growth of plants. However, such arrangement also has disadvantages of rapid evaporation, large demand for water and tendency to leak when the pipe connector is not handled well.

The pipe connector 101 may also be arranged at the middle portion of the water storage container 1, and advantages and disadvantages of this arrangement are between those of the above two.

The pipe connector 101 may be arranged according to the rainfall and the drought-resistant ability of plants. For an evaporation cover without connection to the funnel, the hole for conduit to pass through 202 on the evaporation cover may be covered.

### Example 5

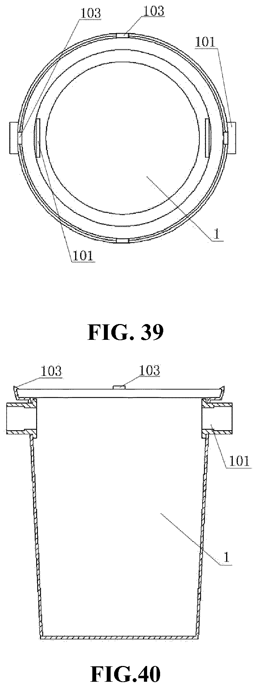

In this embodiment, Fig. 38 schematically shows the water storage container with a lock hook 103 and the pipe connector 101. Fig. 39 is a top view of the water storage container shown in Fig. 38. Fig. 40 is a sectional view showing the water storage container shown in Fig. 38. In the above embodiments, the water storage container 1 of the device for improving plant survival is provided with a lock hook 103. The lock hook 103 is a small block with a barb, and used to hook the evaporation cover 2 to snap the water storage container 1 with the evaporation cover 2, thereby preventing leakage of sand or soil at the joint due to the displacement. The water storage container 1 and the evaporation cover 2 can also be connected in other ways, such as threaded connection, binding, gluing, screwing, etc.

### Example 6

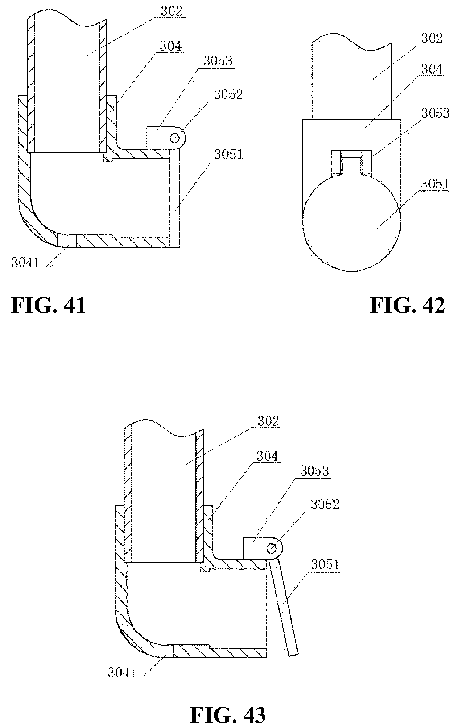

In this embodiment, Fig. 41 is a sectional view showing the structure of an elbow with a gravity-type backstop at the water outlet. Fig. 42 is a right side view showing the elbow shown in Fig. 41. In the above embodiments, the backstop at the water outlet of the device for improving plant survival may be gravity-type backstop 3051. The gravity-type backstop 3051 is provided with a hinge shaft 3052. The hinge shaft 3052 is mounted on a hinge mount 3053, and the hinge mount 3053 is adhered to the elbow 304. The normal gravity-type backstop 3051 covers the water outlet of the elbow 304 under the action of gravity, preventing water vapor in the water storage container 1 from evaporating into the atmosphere through the conduit 302. When the rain water enters, the backstop 3051 is opened under the force of water. Fig. 43 is a sectional view showing the structure of the gravity-type backstop 3051 shown in Fig. 41 in an open state.

### Example 7

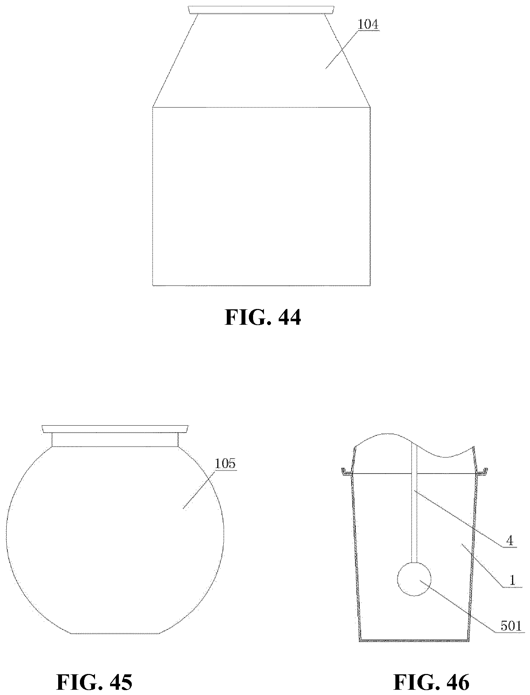

In this embodiment, Fig. 44 schematically shows the structure of a water storage container 104 with lower portion larger than upper portion. The water storage container of the above embodiments may be processed to have a lower portion larger than an upper portion, thereby increasing the water storage amount and extending the survival time of plants.

### Example 8

In this embodiment, Fig. 45 schematically shows the structure of a spherical water storage container 105. The water storage containers of the above embodiments may also be made into the spherical water storage containers. The water storage container and the evaporation cover may also be can-shaped, elliptical, square and polygonal.

### Example 9

In this embodiment, Fig. 46 schematically shows the structure of a spherical float 501. The spherical float can also be used in the above embodiments. The float may be elliptical, square and polygonal.

### Example 10

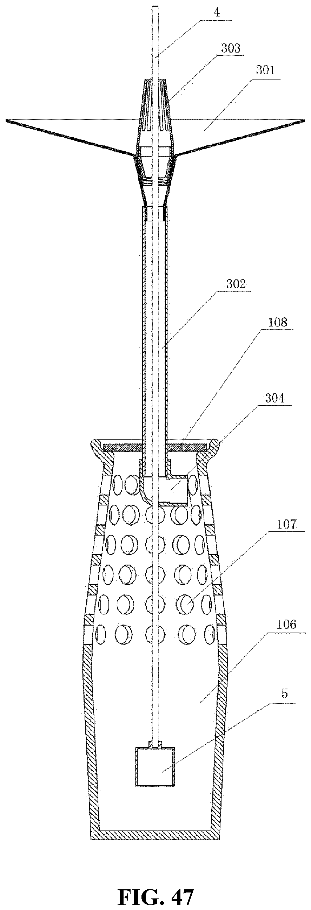

In this embodiment, Fig. 47 schematically shows the structure of the device. In the device for improving plant survival according to example 1 or 3, the water storage container 1 and the evaporation cover 2 are integrated to form a water storage evaporator 106. An upper end of the water storage evaporator 106 is provided with a plurality of vent holes 107. A lower end of the water storage evaporator 106 is used for storing water, and has the same function as the water storage container 1 and the evaporation cover 2. The opening at the upper end of the water storage evaporator 106 is provided with a cover 108. The cover 108 is provided with a hole for the conduit to pass through. The water storage evaporator 106 is buried in the soil of the roots of plants, and water at the lower end of the water storage evaporator 106 evaporates into the soil through the plurality of vent holes 107. The water storage evaporator 106 may be made of plastic, ceramic, or a material similar to crock. The plurality of vent holes on the upper end of the water storage evaporator 106 may be a gauze to prevent the soil or sand from entering the water storage evaporator 106.The disclosed device involves low cost, simple operation and easy transportation, and is particularly suitable for use in arid and water-shortage areas. The device can be used to maintain the plant survival during the continuous drought, and maintain the survival of the cultivated flowers and grass when people are out for a long time. Some areas where only grass can survive can be planted with economic trees such as fruit trees, poplars and pine trees using the device. In addition, with the application of the device, grass and trees can even be planted in some arid and desertified areas to turn the desert into an oasis, thereby improving the living environment of human beings.

Described above are merely embodiments of the invention, which are not intended to limit the scope of the invention. Any changes or substitutions made based on the disclosed contents should fall within the scope as defined by the appended claims.

## Claims

1. A device for improving plant survival, comprising: a water storage container, an evaporation cover, a funnel, an indicator rod and a float;
**characterized in that** the water storage container is used for water storage; the evaporation cover is provided on the water storage container; the evaporation cover has a gas-permeable structure and is connected to the funnel; the indicator rod is arranged in a leak tube of the funnel; a gap is formed between the leak tube of the funnel and the indicator rod; a lower end of the indicator rod extends to the water storage container and is connected to the float; and the float drives the indicator rod to indicate a water level in the water storage container.

2. The device according to claim 1, **characterized in that** a gauze is provided outside the evaporation cover to prevent soil or sand from entering the water storage container.

3. The device according to claim 1 or 2, **characterized in that** an inner thread is provided inside the funnel; a filter is arranged in the funnel with the inner thread; a lower end of the filter is provided with an outer thread; an upper end of the filter is provided with filter pore and an opening for the indicator rod to pass through; the funnel is connected to the evaporation cover through a conduit; a lower end of the conduit is connected to one end of an elbow; a water outlet arranged at the other end of the elbow is provided with a backstop; the backstop is conFig.d to prevent water in the water storage container from evaporating to the environment through the conduit by blocking the water outlet after water injection is stopped; the elbow is provided with the opening for the indicator rod to pass through; and the indicator rod passes through the filter, the funnel, the conduit and the elbow to connect with the float.

4. The device according to claim 3, **characterized in that** the inner thread in the funnel is tapered; the filter is provided in the funnel with the tapered inner thread; and the outer thread at the lower end of the filter is tapered.

5. The device according to claim 1, 2 or 4, **characterized in that** a pipe connector is provided on the water storage container; and a plurality of water storage containers are connected using a water pipe via the pipe connector.

6. The device according to claim 3, **characterized in that** a pipe connector is provided on the water storage container; and a plurality of water storage containers are connected using a water pipe via the pipe connector.

7. The device according to claim 1 or 2, **characterized in that** the funnel and the evaporation cover are connected by a conduit.

8. The device according to claim 1 or 4, **characterized in that** the water storage container and the evaporation cover are integrated to form a water storage evaporator; an upper end of the water storage evaporator is provided with a plurality of vent holes; a lower end of the water storage evaporator is used for water storage; a cover is provided on an opening at the upper end of the water storage evaporator; and the cover is provided with a hole for a conduit to pass through.

9. The device of claim 3, **characterized in that** the water storage container and the evaporation cover are integrated to form a water storage evaporator; an upper end of the water storage evaporator is provided with a plurality of vent holes; a lower end of the water storage evaporator is used for water storage; a cover is provided on an opening at the upper end of the water storage evaporator; and the cover is provided with a hole for a conduit to pass through.

10. The device according to claim 8, **characterized in that** the plurality of vent holes provided at the upper end of the water storage evaporator are covered with a gauze.
